# EUROPÄISCHE PATENTSCHRIFT

(11) **EP 3 426 527 B1**
(45) Veröffentlichungstag und Bekanntmachung des Hinweises auf die Patenterteilung: **15.06.2022**
(21) Anmeldenummer: 17717680.7
(22) Anmeldetag: 12.04.2017
(51) Int. Cl.: B61D 33/00, B60N 2/64, B60N 2/68, B60N 2/005, B61D 17/04, B61D 19/00

(54) **FAHRZEUG FÜR DEN ÖFFENTLICHEN PERSONENVERKEHR**
PUBLIC TRANSPORT VEHICLE
VÉHICULE POUR LE TRANSPORT PUBLIC DE PERSONNES

(30) Priorität: 02.05.2016 DE 102016207519
(43) Veröffentlichungstag der Anmeldung: 16.01.2019
(73) Patentinhaber: Siemens Mobility GmbH, 81739 München (DE)
(72) Erfinder: ESCH, Christoph, 40225 Düsseldorf (DE)
(86) Internationale Anmeldenummer: PCT/EP2017/058781
(87) Internationale Veröffentlichungsnummer: WO 2017/190927

(56) Entgegenhaltungen:
- CN-U- 202 320 030
- JP-A- H05 139 297

## Beschreibung

Die Erfindung betrifft ein Fahrzeug für den öffentlichen Personenverkehr, aufweisend einen Fahrgastraum, eine Trennwand, durch die der Fahrgastraum in einen ersten Fahrgastraum-Teilbereich und einen zweiten Fahrgastraum-Teilbereich unterteilt ist und die eine Durchgangsöffnung aufweist, eine Schiebetür zum Freigeben und Schließen der Durchgangsöffnung und einen ersten Sitz, dessen Rückenlehne zumindest teilweise innerhalb eines Umgebungsbereichs der Schiebetür angeordnet ist.

Es ist bekannt, einen Fahrgastraum eines im öffentlichen Personenverkehr eingesetzten Fahrzeugs durch eine Trennwand in mehrere Fahrgastraum-Teilbereiche zu unterteilen (siehe z.B. JPH05139297). Beispielsweise kann der Fahrgastraum durch eine Trennwand in mehrere Sitzplatzbereiche unterteilt sein. Einer der Sitzplatzbereiche kann z.B. als sogenannter Ruhebereich vorgesehen sein kann, in welchem Telefonate, Musikhören oder sonstige geräuschverursachende Tätigkeiten nicht gestattet sind, während in einem anderen der Sitzplatzbereiche solche Tätigkeiten erlaubt sind. Außerdem kann eine Trennwand beispielsweise vorgesehen sein, um den Fahrgastraum in einen Sitzplatzbereich und einen Ein-/Ausstiegsbereich zu unterteilen.

Um es einem Fahrgast zu ermöglichen, aus einem der Fahrgastraum-Teilbereiche heraus in einen anderen der Fahrgastraum-Teilbereiche zu gehen, weisen solche Trennwände oftmals eine Durchgangsöffnung auf, an welcher eine Schiebetür zum Freigeben und Schließen der Durchgangsöffnung angeordnet ist. Zudem besteht bei Herstellern und Betreibern von Fahrzeugen, die im öffentlichen Personenverkehr eingesetzt werden, ein generelles Bestreben danach, den Fahrgastraum des jeweiligen Fahrzeugs im Hinblick auf die Anzahl zur Verfügung stehender Sitzplätze für Fahrgäste möglichst effektiv zu nutzen, also möglichst viele Sitzplätze für Fahrgäste bereitzustellen.

Eine Aufgabe der Erfindung ist es, ein Fahrzeug der gattungsgemäßen Art bereitzustellen, bei dem eine effektive Raumausnutzung seines Fahrgastraums erreicht werden kann.

Diese Aufgabe wird durch ein Fahrzeug der gattungsgemäßen Art gelöst, welches erfindungsgemäß eine mit der Rückenlehne des ersten Sitzes verbundene Versteifungseinheit zur Versteifung der Rückenlehne des ersten Sitzes aufweist.

Vorteilhafte Weiterbildungen des erfindungsgemäßen Fahrzeugs sind jeweils Gegenstand abhängiger Ansprüche sowie der nachfolgenden Beschreibung.

Die Erfindung beruht auf der Erkenntnis, dass ein Sitz, dessen Rückenlehne zumindest teilweise in einem Umgebungsbereich einer Schiebetür angeordnet ist, die Schiebetür bei ihrer Bewegung stören oder sogar beschädigen kann, wenn die Rückenlehne des Sitzes ausgelenkt wird, beispielsweise durch einen sitzenden Fahrgast. Daher wird ein solcher Sitz üblicherweise in solch einem großen Abstand zu der Schiebetür angeordnet, dass sicher vermieden werden kann, dass der Sitz im Falle einer Auslenkung die Schiebetür berühren kann.

Mithilfe der Versteifungseinheit kann eine versteifende Verbindung zwischen der Rückenlehne des ersten Sitzes und einem anderen Fahrzeugelement realisiert werden. Als versteifende Verbindung zwischen einem Sitz und einem weiteren Fahrzeugelement kann dabei eine solche Verbindung aufgefasst werden, die eine Auslenkbarkeit der Rückenlehne des Sitzes verringert, insbesondere relativ zu dem weiteren Fahrzeugelement.

Eine verringerte Auslenkbarkeit des ersten Sitzes ermöglicht es, den Sitz näher an der Schiebetür zu platzieren, ohne dabei die Gefahr zu erhöhen, dass der Sitz im Falle einer Auslenkung die Schiebetür berührt und sie gegebenenfalls beschädigen kann. Dies wiederum ermöglicht eine engere bzw. platzsparende Bestuhlung des Fahrzeugs.

Somit kann mithilfe der Versteifungseinheit eine effektive Raumausnutzung des Fahrgastraums, insbesondere im Hinblick auf die Anzahl zur Verfügung stehender Sitzplätze, erreicht werden.

Die Schiebetür umfasst zweckmäßigerweise einen Türflügel, auch Türblatt genannt. Vorzugsweise ist der Türflügel der Schiebetür senkrecht zur Fahrzeuglängsrichtung ausgerichtet. Weiter ist es zweckmäßig, wenn die Schiebetür eine Lagervorrichtung zur beweglichen Lagerung des Türflügels aufweist. Ferner kann die Schiebetür einen Antriebsmechanismus zum Bewegen des Türflügels umfassen. Außerdem kann die Schiebetür eine Sensoreinheit, welche insbesondere einen oder mehrere Bewegungssensoren umfassen kann, zum Auslösen des Antriebsmechanismus aufweisen.

Als Umgebungsbereich der Schiebetür kann ein Raumbereich innerhalb des Fahrzeugs aufgefasst werden, der durch eine entlang der Schiebetür, insbesondere entlang ihres Türflügels, verlaufende erste Ebene sowie durch eine parallel zur ersten Ebene orientierte zweite Ebene, die einen Abstand von 20 cm zur ersten Ebene aufweist, begrenzt ist.

Zweckmäßigerweise befinden sich die beiden Ebenen in demselben Fahrgastraum-Teilbereich. In bevorzugter Weise befindet sich die zweite Ebene an derjenigen Seite der Trennwand, an welcher der Türflügel verschieblich gelagert ist. Anders ausgedrückt, die zweite Ebene befindet sich vorzugsweise in demjenigen der beiden Fahrgastraum-Teilbereiche, innerhalb dessen sich der Türflügel der Schiebetür bewegen kann.

Die erste Ebene fällt zweckmäßigerweise mit einer Oberfläche des Türflügels, insbesondere mit einer senkrecht zur Fahrzeuglängsrichtung ausgerichteten Oberfläche des Türflügels, zusammen. Besonders bevorzugt ist es, wenn die erste Ebene mit einer Oberfläche des Türflügels zusammenfällt, die im geöffneten Zustand der Schiebetür der Trennwand abgewandt ist.

Ferner ist der Umgebungsbereich der Schiebetür nach oben hin zweckmäßigerweise durch eine Fahrgastraumdecke des Fahrzeugs begrenzt. Nach unten hin ist der Umgebungsbereich der Schiebetür zweckmäßigerweise durch einen Fahrgastraumfußboden des Fahrzeugs begrenzt. Weiter ist es zweckmäßig, wenn der Umgebungsbereich der Schiebetür seitlich durch zwei Fahrgastraumseitenwände des Fahrzeugs begrenzt ist.

Vorzugsweise ist eine Bewegungsebene der Schiebetür - also eine Ebene, entlang welcher sich der Türflügel der Schiebetür bewegen kann - senkrecht zur Fahrzeuglängsrichtung ausgerichtet.

Zweckmäßigerweise verbindet die Durchgangsöffnung die beiden Fahrgastraum-Teilbereiche miteinander, wenn die Schiebetür geöffnet ist. Die Durchgangsöffnung der Trennwand ist zweckmäßigerweise eine Öffnung, durch die eine Person aus einem der beiden Fahrgastraum-Teilbereiche den jeweils anderen Fahrgastraum-Teilbereich betreten kann.

Des Weiteren kann als geöffneter Zustand der Schiebetür ein Zustand der Schiebetür aufgefasst werden, bei dem die Schiebetür die Durchgangsöffnung freigibt. Entsprechend kann als geschlossener Zustand der Schiebetür ein Zustand der Schiebetür aufgefasst werden, bei dem die Schiebetür die Durchgangsöffnung verschließt. Im geöffneten Zustand der Schiebtür kann eine Person die Durchgangsöffnung durchschreiten. Dagegen kann die Durchgangsöffnung im geschlossenen Zustand der Schiebetür nicht durchschritten werden.

Die Trennwand kann mehrteilig ausgebildet sein. Das heißt, die Trennwand kann aus mehreren Wandungsabschnitten bzw. Wandungsteilen zusammengesetzt sein.

In bevorzugter Weise ist das Fahrzeug ein Schienenfahrzeug, insbesondere ein Personenwagen. Die Erfindung ist jedoch nicht auf Schienenfahrzeuge beschränkt. So kann das Fahrzeug beispielsweise ein Reisebus sein.

Sinnvollerweise ist mindestens einer der beiden zuvor erwähnten Fahrgastraum-Teilbereiche ein Sitzplatzbereich des Fahrzeugs - also ein Bereich des Fahrzeugs, in dem ein oder mehrere Sitze für Fahrgäste angeordnet sind. Der andere der beiden zuvor erwähnten Fahrgastraum-Teilbereiche kann z.B. ein Ein-/Ausstiegsbereich des Fahrzeugs oder ebenfalls ein Sitzplatzbereich sein.

Vorteilhafterweise ist die Rückenlehne des ersten Sitzes an ihrer Rückseite mit der Versteifungseinheit verbunden. Das Versteifungselement ist also vorteilhafterweise an der Rückseite der Rückenlehne des ersten Sitzes befestigt, insbesondere mittels einer oder mehrerer Schraubverbindungen.

Der Ausdruck "Rückseite der Rückenlehne" kann gemäß seinem üblichen Verständnis verstanden werden. Das heißt, als Vorderseite der Rückenlehne kann diejenige Seite der Rückenlehne aufgefasst werden, an der sich eine Person, die auf dem Sitz sitzt, anlehnen kann. Entsprechend kann als Rückseite der Rückenlehne die der Vorderseite gegenüberliegende Seite der Rückenlehne aufgefasst werden.

Gemäß einer bevorzugten Ausgestaltung der Erfindung ist die Rückenlehne des ersten Sitzes mit ihrer Rückseite der Schiebetür zugewandt. Dadurch lässt sich der erste Sitz nah an der Schiebetür platzieren. Weiter ist es vorteilhaft, wenn die Rückenlehne des ersten Sitzes einen Abstand von höchstens 10 cm, vorzugsweise höchstens 5 cm, zu der Schiebetür, insbesondere zu deren Türflügel, aufweist. Besonders bevorzugt ist es, wenn die Rückenlehne des ersten Sitzes einen Abstand von höchstens 3 cm zu der Schiebetür, insbesondere zu deren Türflügel, aufweist. Als Abstand einer Rückenlehne eines Sitzes zur Schiebetür kann vorliegend die kürzeste Entfernung zwischen der Schiebetür und der Rückenlehne an ihrer der Schiebetür nächsten Stelle aufgefasst werden. Zweckmäßigerweise bezieht sich der Abstand der Rückenlehne zur Schiebetür auf einen geöffneten Zustand der Schiebetür.

Bei einer vorteilhaften Ausführung der Erfindung erstreckt sich die Versteifungseinheit bzw. ein Abschnitt der Versteifungseinheit über mindestens 60%, vorzugsweise über mindestens 80%, der Breite der Rückenlehne des ersten Sitzes. Auf diese Weise kann eine besonders starke Versteifung der Rückenlehne erreicht werden.

In einer vorteilhaften Weiterbildung der Erfindung weist das Fahrzeug einen weiteren Sitz mit einer Rückenlehne auf. Der weitere Sitz kann insbesondere in demselben Abstand zu der ersten, den Umgebungsbereich der Schiebetür begrenzenden Ebene angeordnet sein wie der erste Sitz.

Vorteilhafterweise verbindet die Versteifungseinheit die Rückenlehne des ersten Sitzes versteifend mit der Rückenlehne des weiteren Sitzes. Sinnvollerweise verbindet die Versteifungseinheit die beiden Rückenlehnen jeweils an ihren Rückseiten miteinander.

Ferner kann vorgesehen sein, dass das Fahrzeug einen Mittelgang aufweist. Das Fahrzeug kann also insbesondere ein sogenannter Mittelgangwagen sein, auch Großraumwagen genannt.

Des Weiteren weist das Fahrzeug vorzugsweise einen zweiten Sitz auf. Bei dem zweiten Sitz kann es sich insbesondere um den zuvor erwähnten weiteren Sitz handeln. Zweckmäßigerweise sind der erste und der zweite Sitz in demselben Fahrgastraum-Teilbereich - also beispielsweise beide im ersten Fahrgastraum-Teilbereich oder beide im zweiten Fahrgastraum-Teilbereich - angeordnet. Weiter ist es vorteilhaft, wenn die Rückenlehne des zweiten Sitzes zumindest teilweise innerhalb des Umgebungsbereichs der Schiebetür angeordnet ist. Außerdem ist es bevorzugt, wenn der zweite Sitz an derselben Seite des Mittelgangs angeordnet ist wie der erste Sitz. Die beiden Sitze sind also vorzugsweise nicht durch den Mittelgang voneinander getrennt. Darüber hinaus ist es zweckmäßig, wenn der zweite Sitz seitlich neben dem ersten Sitz angeordnet ist. Das heißt, der zweite Sitz ist zweckmäßigerweise bezüglich der Fahrzeuglängsrichtung an derselben Position platziert wie der erste Sitz.

Vorzugsweise ist der erste Sitz ein gangseitiger Sitz. Der zweite Sitz hingegen ist vorzugweise ein wandseitiger Sitz. Als wandseitiger Sitz kann ein Sitz aufgefasst werden, welcher näher an einer Fahrgastraumseitenwand des Fahrzeugs als am Mittelgang angeordnet ist. Entsprechend kann als gangseitiger Sitz ein Sitz aufgefasst werden, welcher näher am Mittelgang als einer Fahrgastraumseitenwand des Fahrzeugs angeordnet ist.

Zudem ist es vorteilhaft, wenn die Versteifungseinheit den ersten Sitz versteifend mit dem zweiten Sitz, insbesondere mit dessen Rückenlehne, verbindet. Mithilfe der Versteifungseinheit kann die Rückenlehne des ersten Sitzes also gegen die Rückenlehne des zweiten Sitzes versteift werden.

Die Versteifungseinheit ist vorteilhafterweise sowohl an der Rückenlehne des ersten Sitzes als auch an der Rückenlehne des zweiten Sitzes befestigt.

Ferner kann das Fahrzeug einen dritten sowie einen vierten Sitz aufweisen. Der erste und der zweite Sitz sind vorzugsweise im ersten Fahrgastraum-Teilbereich angeordnet, wohingegen der dritte und der vierte Sitz vorzugsweise im zweiten Fahrgastraum-Teilbereich angeordnet sind.

Vorteilhafterweise sind die vier Sitze mit ihren Rückenlehnen in einem Abstand von höchstens 20 cm, insbesondere höchstens 10 cm, zu der Trennwand angeordnet. Die Rückenlehnen des dritten und vierten Sitzes müssen nicht notwendigerweise in demselben Abstand zur Trennwand angeordnet sein wie der erste und der zweite Sitz. So können die Rückenlehnen des dritten und vierten Sitzes z.B. in einem geringeren Abstand zur Trennwand angeordnet sein als der erste und der zweite Sitz.

Des Weiteren ist es vorteilhaft, wenn die Versteifungseinheit die Rückenlehnen der vier Sitze versteifend miteinander verbindet. Mithilfe der Versteifungseinheit können die Rückenlehnen der vier Sitze also gegeneinander versteift werden. Dies ermöglicht eine besonders starke Versteifung der Rückenlehnen. Zweckmäßigerweise ist die Versteifungseinheit an den Rückenlehnen der einzelnen Sitze befestigt, z.B. mithilfe von Schraubverbindungen.

In bevorzugter Weise ist der dritte Sitz ein gangseitiger Sitz. Der vierte Sitz ist vorzugsweise ein wandseitiger Sitz. Vorteilhafterweise ist der erste Sitz in Rücken-an-Rücken-Anordnung zu dem dritten Sitz angeordnet. Der zweite Sitz wiederum ist vorteilhafterweise in Rücken-an-Rücken-Anordnung zu dem vierten Sitz angeordnet.

Unter einer Rücken-an-Rücken-Anordnung zweier Sitze kann vorliegend eine Anordnung der beiden Sitze verstanden werden, bei der die Sitze mit ihren Rückenlehnen einander am nächsten sind, wobei die Rückenlehnen der Sitze voneinander beabstandet sein können.

Ferner ist es zweckmäßig, wenn das Fahrzeug einen Fahrgastraumfußboden aufweist. Die Versteifungseinheit kann den ersten Sitz und/oder einen der anderen Sitze versteifend mit dem Fahrgastraumfußboden verbinden.

Darüber hinaus ist es zweckmäßig, wenn das Fahrzeug eine Fahrgastraumseitenwand aufweist. Die Versteifungseinheit kann den ersten Sitz und/oder einen der anderen Sitze versteifend mit der Fahrgastraumseitenwand verbinden.

Des Weiteren kann die Versteifungseinheit einstückig ausgebildet sein oder mehrere miteinander verbundene Teile umfassen.

Zweckmäßigerweise ist ein Teil der Versteifungseinheit, insbesondere eine Hälfte der Versteifungseinheit, im ersten Fahrgastraum-Teilbereich angeordnet. Dieser Teil der Versteifungseinheit kann z.B. den ersten und den zweiten Sitz versteifend miteinander verbinden. Ein anderer Teil der Versteifungseinheit, insbesondere die andere Hälfte der Versteifungseinheit, wiederum ist zweckmäßigerweise im zweiten Fahrgastraum-Teilbereich angeordnet. Der letztgenannte Teil der Versteifungseinheit kann beispielsweise den dritten und den vierten Sitz versteifend miteinander verbinden.

Weiterhin kann die Versteifungseinheit insbesondere spiegelsymmetrisch bezüglich der Trennwand oder einer zur Trennwand parallelen Ebene ausgestaltet sein.

Die Versteifungseinheit kann beispielsweise als Profilbauteil ausgebildet sein oder mindestens ein Profilbauteil, insbesondere ein Strangpressprofil, umfassen. Weiterhin kann die Versteifungseinheit als Blech, insbesondere als umgeformtes Blech, ausgebildet sein oder mindestens ein Blech, insbesondere ein umgeformtes Blech, umfassen. Dies ermöglicht, eine kosten- und aufwandsgünstige Herstellung der Versteifungseinheit.

Des Weiteren kann die Versteifungseinheit zumindest abschnittweise plattenförmig ausgebildet sein. Das heißt, die Versteifungseinheit kann mindestens einen plattenförmigen Abschnitt aufweisen.

Es ist zweckmäßig, wenn die Versteifungseinheit einen ersten Abschnitt aufweist, der vollständig im ersten Fahrgastraum-Teilbereich angeordnet ist. Dieser Abschnitt kann beispielsweise den ersten Sitz versteifend mit dem zweiten Sitz verbinden. Weiter ist es zweckmäßig, wenn die Versteifungseinheit einen zweiten Abschnitt aufweist, der vollständig im zweiten Fahrgastraum-Teilbereich angeordnet ist. Der zweite Abschnitt kann z.B. den dritten Sitz versteifend mit dem vierten Sitz verbinden.

Ferner ist es bevorzugt, wenn die Versteifungseinheit einen dritten Abschnitt aufweist, der teilweise im ersten Fahrgastraum-Teilbereich sowie teilweise im zweiten Fahrgastraum-Teilbereich angeordnet ist. Vorteilhaferweise verbindet der dritte Abschnitt die ersten beiden Abschnitte der Versteifungseinheit miteinander. Weiterhin kann die Versteifungseinheit weitere Abschnitte aufweisen, die wie der dritte Abschnitt ausgestaltet sind.

Vorteilhafterweise ist die Schiebetür, insbesondere deren Türflügel, in ihrem geöffneten Zustand von dem dritten Abschnitt der Versteifungseinheit beabstandet. Auf diese Weise kann verhindert werden, dass beim Öffnen der Schiebetür der Türflügel gegen diesen Abschnitt der Versteifungseinheit stößt. Dadurch wiederum kann eine Beschädigung der Schiebetür und/oder der Versteifungseinheit vermieden werden.

Weiter ist es zweckmäßig, wenn die Trennwand mindestens eine Öffnung aufweist, durch welche ein Abschnitt der Versteifungseinheit, insbesondere der zuvor erwähnte dritte Abschnitt, geführt ist.

Des Weiteren kann die Versteifungseinheit mindestens eine Strebe aufweisen, welche z.B. den ersten Abschnitt der Versteifungseinheit mit dem zweiten Abschnitt der Versteifungseinheit verbindet. Eine solche Strebe kann insbesondere dazu dienen, den ersten Abschnitt der Versteifungseinheit gegen den zweiten Abschnitt der Versteifungseinheit zu versteifen.

Ferner ist es bevorzugt, wenn die Trennwand zumindest abschnittweise durchsichtig ist. Darüber hinaus ist es bevorzugt, wenn die Schiebetür zumindest abschnittweise durchsichtig ist. Besonders bevorzugt ist es, wenn mindestens 70% der Oberfläche der Trennwand und/oder der Oberfläche der Schiebetür durchsichtig sind. Auf diese Weise kann bei Fahrgästen optisch ein großes Raumgefühl hervorgerufen werden. Die Trennwand und/oder die Schiebetür können/kann unter anderem Kunststoff als Material aufweisen.

Zweckmäßigerweise sind die zuvor erwähnten Sitze jeweils mittels eines Sitzträgers mit einer Tragstruktur des Fahrzeugs, insbesondere mit einem Fußboden und/oder einer Seitenwand des Fahrzeugs, verbunden. Die einzelnen Sitze können beispielsweise jeweils mittels eines eigenen Sitzträgers mit der Tragstruktur des Fahrzeugs verbunden sein. Weiterhin ist es möglich, dass mindestens zwei der Sitze mittels eines gemeinsamen Sitzträgers mit der Tragstruktur des Fahrzeugs verbunden sind. Die einzelnen Sitzträger können z.B. jeweils als Sitzträger mit Tragfüßen oder als sogenannter Cantilever-Sitzträger ausgeführt sein.

Die bisher gegebene Beschreibung vorteilhafter Ausgestaltungen der Erfindung enthält zahlreiche Merkmale, die in den einzelnen abhängigen Ansprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Fahrzeug kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Zeichnungen näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

In den Zeichnungen sind Ausführungsbeispiele der Erfindung dargestellt, welche im Weiteren näher erläutert werden.

Es zeigen:
- FIG 1: einen Abschnitt eines Fahrzeugs mit einem Fahrgastraum, einer Trennwand, welche den Fahrgastraum in zwei Sitzplatzbereiche unterteilt, sowie einer Schiebetür in einer Schnittdarstellung;
- FIG 2: einen Schnitt durch das Fahrzeug entlang der Schnittebene II-II aus FIG 1;
- FIG 3: einen Abschnitt eines weiteren Fahrzeugs mit einem Fahrgastraum, einer Trennwand, welche den Fahrgastraum in einen Sitzplatzbereich und einen Einstiegsbereich unterteilt, sowie einer Schiebetür in einer Schnittdarstellung; und
- FIG 4: einen Schnitt durch das weitere Fahrzeug entlang der Schnittebene IV-IV aus FIG 3.

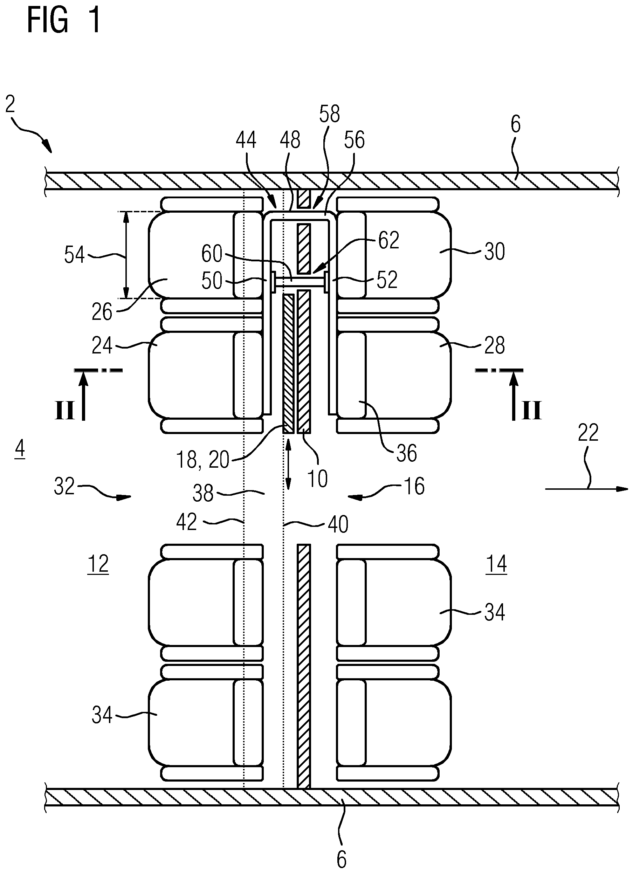

FIG 1 zeigt eine schematische, nicht maßstabsgetreue Schnittdarstellung eines Abschnitts eines Fahrzeugs 2 für den öffentlichen Personenverkehr. Bei dem Fahrzeug 2 kann es sich beispielsweise um ein Schienenfahrzeug, insbesondere um einen Personenwagen, handeln.

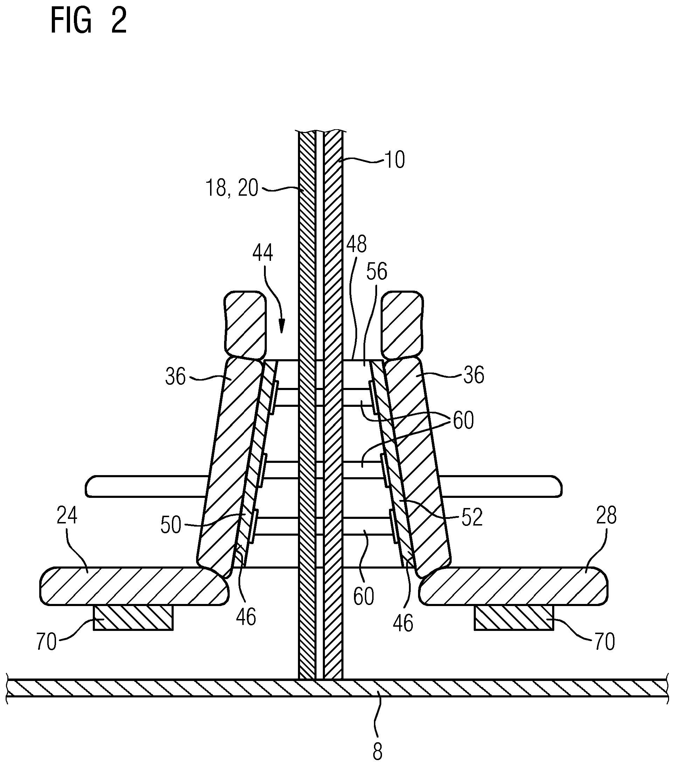

Das Fahrzeug 2 weist einen Fahrgastraum 4 auf, der seitlich durch zwei Fahrgastraumseitenwände 6 begrenzt ist. Nach unten hin ist der Fahrgastraum 4 durch einen Fahrgastraumfußboden 8 begrenzt (vgl. FIG 2) und nach oben hin ist der Fahrgastraum 4 durch eine (figürlich nicht dargestellte) Fahrgastraumdecke begrenzt.

Außerdem weist das Fahrzeug 2 eine Trennwand 10 auf. Die Trennwand 10 unterteilt den Fahrgastraum 4 in einen ersten Fahrgastraum-Teilbereich 12 und einen zweiten Fahrgastraum-Teilbereich 14, wobei die Trennwand 10 eine Durchgangsöffnung 16 aufweist, durch welche aus einem der beiden Fahrgastraum-Teilbereiche 12, 14 der jeweils andere der beiden Fahrgastraum-Teilbereiche 12, 14 betreten werden kann.

Ferner weist das Fahrzeug 2 eine Schiebetür 18 zum Freigeben und Schließen der Durchgangsöffnung 16 auf. Die Schiebetür 18 umfasst einen verschiebbar gelagerten Türflügel 20. Dieser ist innerhalb des ersten Fahrgastraum-Teilbereichs 12 angeordnet.

Darüber hinaus weist die Schiebetür 18 eine Lagervorrichtung zum Lagern des Türflügels 20, einen Antriebsmechanismus zum Antreiben des Türflügels 20 sowie mehrere Bewegungssensoren zum Auslösen des Antriebsmechanismus auf. Einer besseren Übersichtlichkeit halber sind die Lagervorrichtung, der Antriebsmechanismus und die Bewegungssensoren figürlich nicht dargestellt.

Sowohl die Trennwand 10 als auch die Schiebetür 18 sind senkrecht zur Längsrichtung 22 des Fahrzeugs 2 ausgerichtet. Die Bewegungsrichtung des Türflügels 20 ist durch einen Doppelpfeil angedeutet.

Das Fahrzeug 2 weist außerdem einen ersten Sitz 24 sowie einen zweiten Sitz 26 auf, die beide im ersten Fahrgastraum-Teilbereich 12 angeordnet sind. Des Weiteren weist das Fahrzeug 2 einen dritten Sitz 28 sowie einen vierten Sitz 30 auf, die beide im zweiten Fahrgastraum-Teilbereich 14 angeordnet sind. Bei beiden Fahrgastraum-Teilbereichen 12, 14 handelt es sich im vorliegenden Ausführungsbeispiel somit um Sitzplatzbereiche.

Der erste Sitz 24 ist in Rücken-an-Rücken-Anordnung zu dem dritten Sitz 28 angeordnet und der zweite Sitz 26 ist in Rücken-an-Rücken-Anordnung zu dem vierten Sitz 30 angeordnet. Ferner ist der erste Sitz 24 seitlich neben dem zweiten Sitz 26 angeordnet, während der dritte Sitz 28 seitlich neben vierten Sitz 30 angeordnet ist.

Darüber hinaus weist das Fahrzeug 2 einen Mittelgang 32 auf, der sich durch beide Fahrgastraum-Teilbereiche 12, 14 erstreckt. Der erste und der dritte Sitz 24, 28 sind gangseitige Sitze, wohingegen der zweite und der vierte Sitz 26, 30 wandseitige Sitze sind. Weiterhin sind die besagten vier Sitze 24-30 jeweils an derselben Seite des Mittelgangs 32 angeordnet.

Außerdem weist das Fahrzeug 2 vier weitere Sitze 34 auf, die jeweils an der anderen Seite des Mittelgangs 32 angeordnet sind. Zwei der weiteren Sitze 34 sind im ersten Fahrgastraum-Teilbereich 12 und die anderen beiden weiteren Sitze 34 sind im zweiten Fahrgastraum-Teilbereich 14 angeordnet. Jeder der zuvor erwähnten Sitze 24-30, 34 weist eine Rückenlehne 36 auf.

Im geöffneten Zustand der Schiebetür 18, welcher in FIG 1 dargestellt ist, befindet sich der Türflügel 20 zwischen dem ersten und dem dritten Sitz 24, 28. Im geschlossenen Zustand der Schiebetür 18, welcher figürlich nicht dargestellt ist, befindet sich der Türflügel 20 hingegen im Mittelgang 32.

Die Rückenlehnen 36 des ersten und des zweiten Sitzes 24, 26 sind teilweise innerhalb eines Umgebungsbereichs 38 der Schiebetür 18 angeordnet. Der Umgebungsbereich 38 der Schiebetür 18 ist ein Raumbereich innerhalb des Fahrzeugs 2, welcher durch eine erste (gedachte) Ebene 40, die entlang des Türflügels 20 verläuft sowie durch eine parallel zur ersten Ebene 40 orientierte zweite (gedachte) Ebene 42, die einen Abstand von 20 cm zum Türflügel 20 sowie einen Abstand von 20 cm zur ersten Ebene 40 aufweist, begrenzt ist.

Beide Ebenen 40, 42 befinden sich innerhalb des ersten Fahrgastraum-Teilbereichs 12. Zudem fällt die erste Ebene 40 mit einer Oberfläche des Türflügels 20 zusammen, welche der Trennwand 10 im geöffneten Zustand der Schiebetür 18 abgewandt ist. In FIG 1 sind die beiden Ebenen 40, 42 in Form von gepunkteten Linien dargestellt.

Des Weiteren weist das Fahrzeug 2 eine Versteifungseinheit 44 auf, welche die Rückenlehnen 36 der vier erstgenannten Sitze 24-30 an ihren Rückseiten 46 versteifend miteinander verbindet (vgl. FIG 2). Die Versteifungseinheit 44 ist an den Rückseiten 46 der Rückenlehnen 36 dieser Sitze 24-30 befestigt, beispielsweise mithilfe von Schraubverbindungen.

Besagte Versteifungseinheit 44 verringert eine Auslenkbarkeit der Rückenlehnen 36 und ermöglicht dadurch eine effektivere Raumausnutzung des Fahrgastraums 4 im Hinblick auf die Anzahl zur Verfügung stehender Sitzplätze in beiden Fahrgastraum-Teilbereichen 12, 14.

Im vorliegenden Ausführungsbeispiel ist jeder der zuvor erwähnten Sitze 24-30, 34 in einem Abstand von weniger als 10 cm zu der Trennwand 10 angeordnet, wobei der erste Sitz 24 im geöffneten Zustand der Schiebetür 18 insbesondere einen Abstand von höchstens 3 cm zum Türflügel 20 aufweist.

Die Versteifungseinheit 44 umfasst ein gebogenes Blech 48. Das Blech 48 weist einen ersten Abschnitt 50 auf, der die Rückenlehnen 36 des ersten und des zweiten Sitzes 24, 26 an ihren Rückseiten 46 versteifend miteinander verbindet und der vollständig im ersten Fahrgastraum-Teilbereich 12 angeordnet ist. Ferner weist das Blech 48 einen zweiten Abschnitt 52 auf, der die Rückenlehnen 36 des dritten und des vierten Sitzes 28, 30 versteifend miteinander verbindet und der vollständig im zweiten Fahrgastraum-Teilbereich 14 angeordnet ist. Diese beiden Abschnitte 50, 52 des Blechs 48 erstrecken sich im Wesentlichen über die gesamte Breite 54 der jeweiligen Rückenlehne 36.

Außerdem weist das Blech 48 einen dritten Abschnitt 56 auf, der die beiden erstgenannten Abschnitte 50, 52 miteinander verbindet und der teilweise im ersten Fahrgastraum-Teilbereich 12 und teilweise im zweiten Fahrgastraum-Teilbereich 14 angeordnet ist, wobei der dritte Abschnitt 56 durch eine Öffnung 58 in der Trennwand 10 geführt ist.

Weiterhin weist die Versteifungseinheit 44 drei übereinander angeordnete metallische Streben 60 auf, die jeweils einen Ends mit dem ersten Abschnitt 50 des Blechs 48 und anderen Ends mit dem zweiten Abschnitt 52 des Blechs 48 verbunden sind, beispielsweise mithilfe von Schraub- und/oder Schweißverbindungen. In FIG 1 ist jedoch nur eine der drei Streben 60 erkennbar. Die Streben 60 versteifen den ersten Abschnitt 50 des Blechs 48 gegen den zweiten Abschnitt 52 des Blechs 48.

Ferner sind die Streben 60 durch eine weitere Öffnung 62 in der Trennwand 10 geführt. Im geöffneten Zustand der Schiebetür 18, welcher in FIG 1 dargestellt ist, ist der Türflügel 20 von den Streben 60 beabstandet.

Neben den zuvor erwähnten Sitzen 24-30, 34 kann das Fahrzeug 2 einen oder mehrere zusätzliche Sitze aufweisen. Solche etwaigen zusätzlichen Sitze sind einer besseren Übersichtlichkeit halber figürlich jedoch nicht dargestellt.

Ferner ist in FIG 1 eine Schnittebene II-II dargestellt, welche parallel zur Längsrichtung 22 des Fahrzeugs 2 durch den ersten und den dritten Sitz 24, 28 verläuft.

FIG 2 zeigt einen Schnitt durch das Fahrzeug 2 entlang der Schnittebene II-II aus FIG 1.

In FIG 2 ist der zuvor erwähnte Fahrgastraumfußboden 8, welcher den Fahrgastraum 4 begrenzt, in einer Schnittdarstellung dargestellt. Außerdem sind die drei zuvor erwähnten Streben 60 der Versteifungseinheit 44 sichtbar.

Grundsätzlich kann die Versteifungseinheit 44 eine andere Anzahl von Streben 60 aufweisen. Zudem müssen nicht notwendigerweise alle Streben 60 übereinander angeordnet sein. Einige oder alle der Streben 60 können prinzipiell in horizontaler Richtung versetzt zueinander angeordnet sein.

Im vorliegenden Ausführungsbeispiel sind der erste und der zweite Sitz 24, 26 mittels eines gemeinsamen Cantilever-Sitzträgers 70 mit der benachbarten Fahrgastraumseitenwand 6 verbunden. Außerdem sind der dritte und der vierte Sitz 28, 30 mittels eines anderen gemeinsamen Cantilever-Sitzträgers 70 mit derselben Fahrgastraumseitenwand 6 verbunden. In analoger Weise sind die weiteren Sitze 34 jeweils in Paaren mittels eines gemeinsamen Cantilever-Sitzträgers mit der anderen Fahrgastraumseitenwand 6 verbunden.

Die Beschreibung des nachfolgenden Ausführungsbeispiels beschränkt sich primär auf die Unterschiede zum vorhergehenden Ausführungsbeispiel, auf das bezüglich gleichbleibender Merkmale und Funktionen verwiesen wird. Nicht erwähnte Merkmale sind im nachfolgenden Ausführungsbeispiel übernommen, ohne dass sie erneut beschrieben werden.

Werden in verschiedenen Figuren die gleichen Bezugszeichen verwendet, so bezeichnen diese im Wesentlichen gleiche bzw. einander entsprechende Elemente. Im Wesentlichen gleiche bzw. einander entsprechende Elemente können aus Gründen der Zweckmäßigkeit aber auch mit unterschiedlichen Bezugszeichen bezeichnet sein.

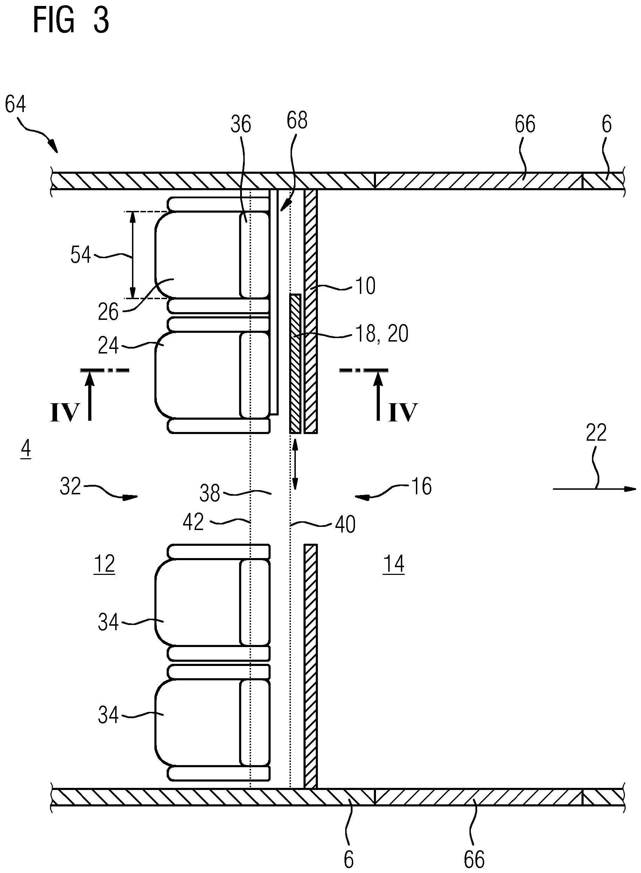

FIG 3 zeigt eine schematische, nicht maßstabsgetreue Schnittdarstellung eines Abschnitts eines weiteren Fahrzeugs 64 für den öffentlichen Personenverkehr.

Auch bei diesem Fahrzeug 64 unterteilt eine Trennwand 10 des Fahrzeugs 64 dessen Fahrgastraum 4 in einen ersten Fahrgastraum-Teilbereich 12 und einen zweiten Fahrgastraum-Teilbereich 14. Im vorliegenden Ausführungsbeispiel ist jedoch der erste Fahrgastraum-Teilbereich 12 ein Sitzplatzbereich, wohingegen der zweite Fahrgastraum-Teilbereich 14 ein Einstiegsbereich ist, in welchem sich keine Sitze befinden. Über zwei einander gegenüberliegend angeordnete Einstiegtüren 66 des Fahrzeugs 64 kann der zweite Fahrgastraum-Teilbereich 14 von außerhalb des Fahrzeugs 64 betreten werden bzw. kann das Fahrzeug 64 verlassen werden.

Das Fahrzeug 64 weist einen gangseitigen ersten Sitz 24 mit einer Rückenlehne 36 sowie einen wandseitigen zweiten Sitz 26 mit einer Rückenlehne 36 auf, wobei der zweite Sitz 26 seitlich neben dem ersten Sitz 24 platziert ist und beide Sitze 24, 26 an derselben Seite eines Mittelgangs 32 angeordnet sind. Die Rückenlehnen 36 dieser beiden Sitze 24, 26 sind teilweise innerhalb eines Umgebungsbereichs 38 einer Schiebetür 18 angeordnet, welche zum Freigeben und zum Schließen einer Durchgangsöffnung 16 der Trennwand 10 eingerichtet ist.

Außerdem weist das Fahrzeug 64 zwei weitere Sitze 34 auf, die im ersten Fahrgastraum-Teilbereich 12 an der anderen Seite des Mittelgangs 32 angeordnet sind.

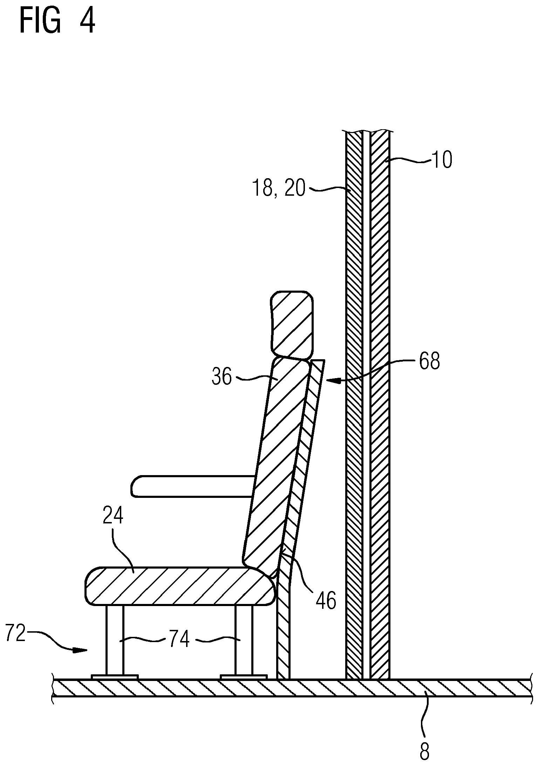

Des Weiteren weist das Fahrzeug 64 eine vollständig im ersten Fahrgastraum-Teilbereich 12 angeordnete Versteifungseinheit 68 auf, welche die Rückenlehnen 36 der beiden erstgenannten Sitze 24, 26 versteifend miteinander sowie mit der benachbarten Fahrgastraumseitenwand 6 verbindet. Die Versteifungseinheit 68 ist an den Rückseiten 46 der Rückenlehnen 36 mit den beiden erstgenannten Sitzen 24, 26 verbunden (vgl. FIG 4). Im vorliegenden Ausführungsbeispiel ist die Versteifungseinheit 68 als Strangpressprofil ausgebildet.

Besagte Versteifungseinheit 68 verringert eine Auslenkbarkeit der Rückenlehnen 36 der beiden erstgenannten Sitze 24, 26 und ermöglicht eine effektivere Raumausnutzung des ersten Fahrgastraum-Teilbereichs 12 im Hinblick auf die Anzahl darin zur Verfügung stehender Sitzplätze.

Ferner ist in FIG 4 eine Schnittebene IV-IV dargestellt, welche parallel zur Längsrichtung 22 des Fahrzeugs 64 durch den ersten Sitz 24 verläuft.

FIG 4 zeigt einen Schnitt durch das weitere Fahrzeug 64 entlang der Schnittebene IV-IV aus FIG 3.

In FIG 4 ist erkennbar, dass die Versteifungseinheit 68, welche die Rückenlehnen 36 der beiden erstgenannten Sitze 24, 26 versteifend miteinander verbindet, die Rückenlehnen 36 dieser beiden Sitze 24, 26 zusätzlich auch mit einem Fahrgastraumfußboden 8 versteifend verbindet.

Im vorliegenden Ausführungsbeispiel sind der erste und der zweite Sitz 24, 26 mittels eines gemeinsamen Sitzträgers 72, der mehrere Tragfüße 74 aufweist, mit dem Fahrgastraumfußboden 8 verbunden. Ebenso sind die beiden anderen Sitze 34 mittels eines gemeinsamen Sitzträgers 72, der mehrere Tragfüße 74 aufweist, mit dem Fahrgastraumfußboden 8 verbunden. Alternativ könnten die Sitze 24, 26, 34 z.B. wie im vorangegangenen Ausführungsbeispiel jeweils in Paaren mittels eines gemeinsamen Cantilever-Sitzträgers 70 mit einer der Fahrgastraumseitenwände 6 verbunden sein. Umgekehrt könnten beim vorangegangenen Ausführungsbeispiel die Sitze 24-30, 34 jeweils in Paaren mittels eines Sitzträgers 72, der mehrere Tragfüße 74 aufweist, mit dem Fahrgastraumfußboden 8 verbunden sein (anstatt jeweils in Paaren mittels eines Cantilever-Sitzträgers 70 mit einer der Fahrgastraumseitenwände 6 verbunden zu sein).

Wie im vorliegenden Ausführungsbeispiel könnte grundsätzlich auch bei der Versteifungseinheit 44 aus FIG 1 und FIG 2 eine versteifende Verbindung mit dem Fahrgastraumfußboden 8 und/oder einer Fahrgastraumseitenwand 6 vorgesehen sein. Ferner könnte der in FIG 3 und FIG 4 dargestellte Fahrzeugabschnitt im Prinzip ein Abschnitt des zuvor beschriebenen Fahrzeugs 2 sein, welcher beispielsweise in Längsrichtung 22 des Fahrzeugs 2 vor oder hinter dem in FIG 1 und FIG 2 dargestellten Fahrzeugabschnitt angeordnet ist.

## Patentansprüche

1. Fahrzeug (2, 64) für den öffentlichen Personenverkehr, aufweisend einen Fahrgastraum (4), eine Trennwand (10), durch die der Fahrgastraum (4) in einen ersten Fahrgastraum-Teilbereich (12) und einen zweiten Fahrgastraum-Teilbereich (14) unterteilt ist und die eine Durchgangsöffnung (16) aufweist, eine Schiebetür (18) zum Freigeben und Schließen der Durchgangsöffnung (16) und einen ersten Sitz (24), dessen Rückenlehne (36) zumindest teilweise innerhalb eines Umgebungsbereichs (38) der Schiebetür (18) angeordnet ist, **gekennzeichnet durch** eine mit der Rückenlehne (36) des ersten Sitzes (24) verbundene Versteifungseinheit (44, 68) zur Versteifung der Rückenlehne (36) des ersten Sitzes (24).

2. Fahrzeug (2, 64) nach Anspruch 1,
**dadurch gekennzeichnet, dass** die Rückenlehne (36) des ersten Sitzes (24) an ihrer Rückseite (46) mit der Versteifungseinheit (44, 68) verbunden ist.

3. Fahrzeug (2, 64) nach Anspruch 1 oder 2,
**dadurch gekennzeichnet, dass** die Rückenlehne (36) des ersten Sitzes (24) mit ihrer Rückseite (46) der Schiebetür (18) zugewandt ist und einen Abstand von höchstens 10 cm, vorzugsweise höchstens 3 cm, zu der Schiebetür (18) aufweist.

4. Fahrzeug (2, 64) nach einem der vorhergehenden Ansprüche, **dadurch gekennzeichnet, dass** sich die Versteifungseinheit (44, 68) über mindestens 60%, vorzugsweise über mindestens 80%, der Breite (54) der Rückenlehne (36) des ersten Sitzes (24) erstreckt.

5. Fahrzeug (2, 64) nach einem der vorhergehenden Ansprüche, **gekennzeichnet durch** einen weiteren Sitz (26) mit einer Rückenlehne (36), wobei die Versteifungseinheit (44, 68) die Rückenlehne (36) des ersten Sitzes (24) versteifend mit der Rückenlehne (36) des weiteren Sitzes (26) verbindet.

6. Fahrzeug (2, 64) nach einem der vorhergehenden Ansprüche, **gekennzeichnet durch** einen Mittelgang (32) und einen zweiten Sitz (26), der an derselben Seite des Mittelgangs (32) seitlich neben dem ersten Sitz (24) angeordnet ist, wobei der erste Sitz (24) ein gangseitiger Sitz ist, der zweite Sitz (26) ein wandseitiger Sitz ist und die Versteifungseinheit (44, 68) den ersten Sitz (24) versteifend mit dem zweiten Sitz (26), insbesondere mit dessen Rückenlehne (36), verbindet.

7. Fahrzeug (2, 64) nach Anspruch 6,
**gekennzeichnet durch** einen dritten sowie einen vierten Sitz (28, 30), wobei der erste und der zweite Sitz (24, 26) im ersten Fahrgastraum-Teilbereich (12) angeordnet sind, der dritte und der vierte Sitz (28, 30) im zweiten Fahrgastraum-Teilbereich (14) angeordnet sind, die vier Sitze (24-30) mit ihren Rückenlehnen (36) in einem Abstand von höchstens 20 cm zu der Trennwand (10) angeordnet sind und die Versteifungseinheit (44) die Rückenlehnen (36) der vier Sitze (24-30) versteifend miteinander verbindet.

8. Fahrzeug (2, 64) nach Anspruch 7,
**dadurch gekennzeichnet, dass** der dritte Sitz (28) ein gangseitiger Sitz ist und der vierte Sitz (30) ein wandseitiger Sitz ist, wobei der erste Sitz (24) in Rücken-an-Rücken-Anordnung zu dem dritten Sitz (28) angeordnet ist und der zweite Sitz (26) in Rücken-an-Rücken-Anordnung zu dem vierten Sitz (30) angeordnet ist.

9. Fahrzeug (2, 64) nach einem der vorhergehenden Ansprüche, **gekennzeichnet durch** einen Fahrgastraumfußboden (8), wobei die Versteifungseinheit (68) den ersten Sitz (24) versteifend mit dem Fahrgastraumfußboden (8) verbindet.

10. Fahrzeug (2, 64) nach einem der vorhergehenden Ansprüche, **gekennzeichnet durch** eine Fahrgastraumseitenwand (6), wobei die Versteifungseinheit (68) den ersten Sitz (24) versteifend mit der Fahrgastraumseitenwand (6) verbindet.

11. Fahrzeug (2, 64) nach einem der vorhergehenden Ansprüche, **dadurch gekennzeichnet, dass** ein Teil der Versteifungseinheit (44) im ersten Fahrgastraum-Teilbereich (12) angeordnet ist und ein anderer Teil der Versteifungseinheit (44) im zweiten Fahrgastraum-Teilbereich (14) angeordnet ist.

12. Fahrzeug (2, 64) nach einem der vorhergehenden Ansprüche, **dadurch gekennzeichnet, dass** die Versteifungseinheit (44, 68) mindestens ein Profilbauteil, insbesondere ein Strangpressprofil, oder ein umgeformtes Blech umfasst.

13. Fahrzeug (2, 64) nach einem der vorhergehenden Ansprüche, **dadurch gekennzeichnet, dass** die Versteifungseinheit (44) einen ersten Abschnitt (50) aufweist, der vollständig im ersten Fahrgastraum-Teilbereich (12) angeordnet ist, einen zweiten Abschnitt (52) aufweist, der vollständig im zweiten Fahrgastraum-Teilbereich (14) angeordnet ist, und einen dritten Abschnitt (56, 60) aufweist, der teilweise im ersten Fahrgastraum-Teilbereich (12) sowie teilweise im zweiten Fahrgastraum-Teilbereich (14) angeordnet ist und die ersten beiden Abschnitte (50, 52) der Versteifungseinheit (44) miteinander verbindet.

14. Fahrzeug (2, 64) nach Anspruch 13,
**dadurch gekennzeichnet, dass** die Schiebetür (18) in ihrem geöffneten Zustand von dem dritten Abschnitt (56, 60) der Versteifungseinheit (44) beabstandet ist.

15. Fahrzeug (2, 64) nach einem der vorhergehenden Ansprüche, **dadurch gekennzeichnet, dass** die Trennwand (10) mindestens eine Öffnung (58, 62) aufweist, durch welche ein Abschnitt (56, 60) der Versteifungseinheit (44) geführt ist.

## Claims

1. Vehicle (2, 64) for public transport, having a passenger compartment (4), a partition (10) by means of which the passenger compartment (4) is divided into a first passenger-compartment partial region (12) and a second passenger-compartment partial region (14) and which has a through-opening (16), a sliding door (18) for opening up and closing the through-opening (16), and a first seat (24), the backrest (36) of which is at least partially arranged within a surrounding region (38) of the sliding door (18),
**characterized by** a reinforcing unit (44, 68), which is connected to the backrest (36) of the first seat (24), for reinforcing the backrest (36) of the first seat (24).

2. Vehicle (2, 64) according to Claim 1,
**characterized in that** the backrest (36) of the first seat (24) is connected on its rear side (46) to the reinforcing unit (44, 68) .

3. Vehicle (2, 64) according to Claim 1 or 2,
**characterized in that** the backrest (36) of the first seat (24) faces with its rear side (46) towards the sliding door (18) and is at a distance of at most 10 cm, preferably at most 3 cm, from the sliding door (18).

4. Vehicle (2, 64) according to one of the preceding claims, **characterized in that** the reinforcing unit (44, 68) extends over at least 60%, preferably over at least 80%, of the width (54) of the backrest (36) of the first seat (24).

5. Vehicle (2, 64) according to one of the preceding claims, **characterized by** a further seat (26) with a backrest (36), wherein the reinforcing unit (44, 68) connects the backrest (36) of the first seat (24) in a reinforcing manner to the backrest (36) of the further seat (26).

6. Vehicle (2, 64) according to one of the preceding claims, **characterized by** a central aisle (32) and a second seat (26) which is arranged laterally next to the first seat (24) on the same side of the central aisle (32), wherein the first seat (24) is an aisle-side seat, the second seat (26) is a wall-side seat, and the reinforcing unit (44, 68) connects the first seat (24) in a reinforcing manner to the second seat (26), in particular to the backrest (36) thereof.

7. Vehicle (2, 64) according to Claim 6,
**characterized by** a third and a fourth seat (28, 30), wherein the first and the second seat (24, 26) are arranged in the first passenger-compartment partial region (12), the third and the fourth seat (28, 30) are arranged in the second passenger-compartment partial region (14), the four seats (24-30) are arranged with their backrests (36) at a distance of at most 20 cm from the partition (10), and the reinforcing unit (44) connects the backrests (36) of the four seats (24-30) to one another in a reinforcing manner.

8. Vehicle (2, 64) according to Claim 7,
**characterized in that** the third seat (28) is an aisle-side seat and the fourth seat (30) is a wall-side seat, wherein the first seat (24) is arranged in back-to-back arrangement with the third seat (28) and the second seat (26) is arranged in back-to-back arrangement with the fourth seat (30).

9. Vehicle (2, 64) according to one of the preceding claims, **characterized by** a passenger-compartment floor (8), wherein the reinforcing unit (68) connects the first seat (24) in a reinforcing manner to the passenger-compartment floor (8).

10. Vehicle (2, 64) according to one of the preceding claims, **characterized by** a passenger-compartment side wall (6), wherein the reinforcing unit (68) connects the first seat (24) in a reinforcing manner to the passenger-compartment side wall (6).

11. Vehicle (2, 64) according to one of the preceding claims, **characterized in that** one part of the reinforcing unit (44) is arranged in the first passenger-compartment partial region (12) and another part of the reinforcing unit (44) is arranged in the second passenger-compartment partial region (14).

12. Vehicle (2, 64) according to one of the preceding claims, **characterized in that** the reinforcing unit (44, 68) comprises at least one profile component, in particular an extruded profile, or a formed metal sheet.

13. Vehicle (2, 64) according to one of the preceding claims, **characterized in that** the reinforcing unit (44) has a first portion (50) which is arranged completely in the first passenger-compartment partial region (12), has a second portion (52) which is arranged completely in the second passenger-compartment partial region (14), and has a third portion (56, 60) which is arranged partially in the first passenger-compartment partial region (12) and partially in the second passenger-compartment partial region (14) and connects the first two portions (50, 52) of the reinforcing unit (44) to each other.

14. Vehicle (2, 64) according to Claim 13,
**characterized in that** the sliding door (18) in its open state is spaced apart from the third portion (56, 60) of the reinforcing unit (44).

15. Vehicle (2, 64) according to one of the preceding claims, **characterized in that** the partition (10) has at least one opening (58, 62) through which a portion (56, 60) of the reinforcing unit (44) is guided.

## Revendications

1. Véhicule (2, 64) de transport public de personnes, comportant un espace (4) de voyageurs, une cloison (10), par laquelle l'espace (4) de voyageurs est subdivisé en une première région (12) partielle de l'espace de voyageurs et en une deuxième région (14) partielle de l'espace de voyageurs et qui a une ouverture (16) de passage, une porte (18) coulissante pour dégager et fermer l'ouverture (16) de passage et un premier siège (24), dont le dossier (36) est disposé au moins en partie dans une région (38) d'environnement de la porte (18) coulissante,
**caractérisé par** une unité (44, 68) de raidissement, reliée au dossier (36) du premier siège (24) pour raidir le dossier (36) du premier siège (24).

2. Véhicule (2, 64) suivant la revendication 1,
**caractérisé en ce que** le dossier (36) du premier siège (24) est relié sur sa face (46) arrière à l'unité (44, 68) de raidissement.

3. Véhicule (2, 64) suivant la revendication 1 ou 2, **caractérisé en ce que** le dossier (36) du premier siège (24) est tourné par sa face (46) arrière vers la porte (18) coulissante et est à une distance de 10 cm au plus, de préférence de 3 cm au plus de la porte (18) coulissante.

4. Véhicule (2, 64) suivant l'une des revendications précédentes, **caractérisé en ce que** l'unité (44, 68) de raidissement s'étend sur au moins 60%, de préférence sur au moins 80%, de la largeur (54) du dossier (36) du premier siège (24).

5. Véhicule (2, 64) suivant l'une des revendications précédentes, **caractérisé par** un autre siège (26) ayant un dossier (36), dans lequel l'unité (44, 68) de raidissement relie le dossier (36) du premier siège (24) à raidissement au dossier (36) de l'autre siège (26) .

6. Véhicule (2, 64) suivant l'une des revendications précédentes, **caractérisé par** un couloir (32) médian et par un deuxième siège (26), qui est disposé du même côté du couloir (32) médian, latéralement du côté du premier siège (24), dans lequel le premier siège (24) est un siège du côté du couloir, le deuxième siège (26) est un siège à côté de la paroi et l'unité (44, 68) de raidissement relie le premier siège (24) à raidissement au deuxième siège (26), notamment par son dossier (36).

7. Véhicule (2, 64) suivant la revendication 6,
**caractérisé par** un troisième ainsi qu'un quatrième sièges (28, 30), dans lequel le premier et le deuxième sièges (24, 26) sont disposés dans la première région (12) partielle de l'espace de passagers, le troisième et le quatrième sièges (28, 30) sont disposés dans la deuxième région (14) partielle de l'espace de passagers, les quatre sièges (24 à 30) sont disposés en ayant leurs dossiers (36) à une distance de 20 cm au plus de la cloison (10) et l'unité (44) de raidissement relie entre eux à raidissement les dossiers (36) des quatre sièges (24 à 30).

8. Véhicule (2, 64) suivant la revendication 7,
**caractérisé en ce que** le troisième siège (28) est un siège du côté du couloir et la quatrième siège (30) est un siège du côté de la paroi, dans lequel le premier siège (24) est disposé dos à dos avec le troisième siège (28) et le deuxième siège (26) est disposé dos à dos avec le quatrième siège (30).

9. Véhicule (2, 64) suivant l'une des revendications précédentes, **caractérisé par** un plancher (8) d'espace de passagers, dans lequel l'unité (68) de raidissement relie en raidissement le premier siège (24) au plancher (8) de l'espace de passagers.

10. Véhicule (2, 64) suivant l'une des revendications précédentes, **caractérisé par** une paroi (6) latérale de l'espace de passagers, dans lequel l'unité (68) de raidissement relie en raidissement le premier siège (24) à la paroi (6) latérale de l'espace de passagers.

11. Véhicule (2, 64) suivant l'une des revendications précédentes, **caractérisé en ce qu'**une partie de l'unité (44) de raidissement est disposée dans la première région (12) partielle de l'espace de passagers et une autre partie de l'unité (44) de raidissement est disposée dans la deuxième région (14) partielle de l'espace de passagers.

12. Véhicule (2, 64) suivant l'une des revendications précédentes, **caractérisé en ce que** l'unité (44, 68) de raidissement comprend au moins une pièce profilée, notamment un profilé filé à la presse ou une tôle conformée.

13. Véhicule (2, 64) suivant l'une des revendications précédentes, **caractérisé en ce que** l'unité (44) de raidissement a une première partie (50), qui est disposée entièrement dans la première région (12) partielle de l'espace de passagers, a une deuxième partie (52), qui est disposée entièrement dans la deuxième région (14) partielle de l'espace de passagers, et a une troisième partie (56, 60), qui est disposée en partie dans la première région (12) partielle de l'espace de passagers ainsi qu'en partie dans la deuxième région (14) partielle de l'espace de passagers et relie entre elles les deux premières parties (50, 52) de l'unité (44) de raidissement.

14. Véhicule (2, 64) suivant la revendication 13,
**caractérisé en ce que** la porte (18) coulissante est, à l'état ouvert, à distance de la troisième partie (56, 60) de l'unité (44) de raidissement.

15. Véhicule (2, 64) suivant l'une des revendications précédentes, **caractérisé en ce que** la cloison (10) a au moins une ouverture (58, 62), dans laquelle passe une partie (56, 60) de l'unité (44) de raidissement.
